# EUROPÄISCHE PATENTSCHRIFT

(11) **EP 1 912 089 B1**
(45) Veröffentlichungstag und Bekanntmachung des Hinweises auf die Patenterteilung: **24.08.2016**
(21) Anmeldenummer: 08000060.7
(22) Anmeldetag: 06.06.2003
(51) Int. Cl.: G01N 21/64, G01N 21/47, G02B 21/16, G02B 21/26, G02B 21/36, G02B 21/06, G02B 21/00

(54) **Mikroskop mit der Beobachtungsrichtung senkrecht zur Beleuchtungsrichtung**
Microscope with the viewing direction perpendicular to the illumination direction
Microscope avec la direction de vue perpendiculaire par rapport à la direction d'eclairage

(30) Priorität: 09.12.2002 DE 10257423
(43) Veröffentlichungstag der Anmeldung: 16.04.2008
(62) Teilanmeldung aus: 03732549.5
(73) Patentinhaber: EUROPÄISCHES LABORATORIUM FÜR MOLEKULARBIOLOGIE (EMBL), D-69117 Heidelberg (DE)
(72) Erfinder: Stelzer, Ernst, 74909 Meckesheim (DE); Enders, Sebastian, 70188 Stuttgart (DE); Huisken, Jan, San Francisco, CA 94117 (US); Lindek, Steffen, 68723 Plankstadt (DE); Swoger, James, 08013 Barcelona (ES)
(74) Vertreter: Harrison, Robert John

(56) Entgegenhaltungen:
- US-A- 5 570 228
- US-A- 5 903 781
- VOIE A H: "Imaging the intact guinea pig tympanic bulla by orthogonal-plane fluorescence optical sectioning microscopy" HEARING RESEARCH, ELSEVIER SCIENCE PUBLISHERS, AMSTERDAM, NL, Bd. 171, 2002, Seiten 119-128, XP002993532 ISSN: 0378-5955
- VOIE A H ET AL: "Orthogonal-plane fluorescence optical sectioning: three-dimensional imaging of macroscopic biological specimens" JOURNAL OF MICROSCOPY, OXFORD, GB, Bd. 170, Nr. 3, Juni 1993 (1993-06), Seiten 229-236, XP002993529 ISSN: 0022-2720
- VOIE A H ET AL: "Three-dimensional reconstruction of the cochlea from two-dimensional images of optical sections" COMPUTERIZED MEDICAL IMAGING AND GRAPHICS, PERGAMON PRESS, NEW YORK, NY, US, Bd. 19, Nr. 5, 1995, Seiten 377-384, XP002993531 ISSN: 0895-6111

## Beschreibung

Die vorliegende Erfindung betrifft ein Mikroskop gemäß dem Oberbegriff des Anspruchs 1.

Im Gegensatz zu der Arbeit an einzelnen Zellen sind lichtmikroskopische Untersuchungen an Embryonen und anderen entwicklungsbiologisch relevanten Proben mit den besonderen Problemen der Absorption und des Auflösungsverlustes behaftet. Zum Beispiel können biologische Fragestellungen im Zusammenhang mit Genexpressionsmustern in sich entwickelnden Organismen derzeit nur schwer mitlichtmikroskopischen Bildgebungsverfahren beantwortet werden, da diese oft zu langsam, zu gering auflösend oder technisch komplex sind oder vom freien Arbeitsabstand oder von der Probenhalterung her eine Beobachtung von millimetergroßen Objekten nicht gestatten. Eine akzeptable Lösung muss die Handhabung großer Proben und eine schnelle, hochauflösende Aufnahme der Daten erlauben und dabei technisch möglichst einfach zu realisieren sein.

Aus der wissenschaftlichen Literatur ist ein Mikroskop für die ozeanographische Forschung bekannt, das dadurch gekennzeichnet ist, dass es mit einem Laser eine Beleuchtungslichtebene in einer Probenkammer erzeugt und senkrecht zu dieser Ebene mit einer Kamera die in der Beleuchtungslichtebene erzeugten Fluoreszenzsignale detektiert [E. Fuchs etal., Opt. Express 10,145(2002)]. Dieses Mikroskop ähnelt dem Ultramikroskop von H. Siedentopf und R. Zsigmondy [Ann. Phys. 10 (4), 1(1903)] und wird für die Detektion einzelner freischwimmender Partikel wie Bakterien eingesetzt. Es ist nicht dafür geeignet, millimetergroße, beispielsweise entwicklungsbiologische Proben aufzunehmen, da eine Küvette als Probenhalter dient.

Ebenso ist es nicht für dreidimensionale Aufnahmen geeignet, da es über keine Möglichkeit verfügt, die Probe relativ zur Beleuchtungslichtebene zu bewegen.

Aus der DE 19720513 A1 bzw. der US 5,903, 781 sowie aus der wissenschaftlichen Literatur [D. Huber etal., J. Microsc. 202,208(2001)] ist ein Instrument für die dreidimensionale Makrographie bekannt, bei dem eine Anordnung zur Erzeugung von Lichtebenen für die photographische Erfassung von Objekten eingesetzt wird. Dabei wird ein Objekt durch eine Beleuchtungsebene bewegt und das reflektierte und gestreute Licht mit einer Kamera detektiert. Dieses Gerät dient dazu, dreidimensionale Rekonstruktionen von zentimetergroßen Objekten anzufertigen. Es ist aber nicht für die Verwendung von Fluorezenzsignalen und auch nicht für die hoch-aufgelöste Wiedergabe der Objekte geeignet. Es wird eine Spaltfigurblende in Verbindung mit einer Spiegelanordnung für die Erzeugung der Lichtebenen eingesetzt. Durch den Einsatz eines nur linear beweglichen Probentischs kann die Probe nicht gedreht werden, so dass keine Beobachtung der Probe von mehreren Seiten möglich ist.

Ferner sind aus der technisch-wissenschaftlichen Literatur Aufbaue für optische Tomographie bekannt. Die optische Projektionstomographie wird beispielsweise in der Genexpressionsanalyse eingesetzt [J. Sharpe etal., Science 296,541 (2002)]. Dabei handelt es sich um ein System, in dem Projektionen biologischer Proben aufgezeichnet werden, wobei die Probe um eine Achse senkrecht zur Detektionsrichtung gedreht wird. Da die Probe nicht senkrecht zur Detektionsachse durch eine Beleuchtungslichtebene selektiv beleuchtet wird, hat das Mikroskop im Gegensatz zum erfindungsgemäßen Mikroskop eine sehr große Schärfentiefe, durch den ein großer Teil der Probe erfasst wird. Daher bietet das Mikroskop nicht die Möglichkeit, die Probe längs der Detektionsachse zu bewegen, um ein dreidimensionales Bild aufzunehmen. Ein dreidimensionales Bild der Probe mit räumlicher Auflösung ist somit nur durch die Rekonstruktion aus den Projektionen möglich.

Aus der DE 43 26 473 C2 ist ein konfokales Theta-Mikroskop bekannt, das dadurch gekennzeichnet ist, dass es ein erstes Objektiv zur Punktbeleuchtung und ein zweites Objektiv zur Abbildung des Objektlichts auf einen Punktdetektor verwendet, wobei die Detektionsrichtung annähernd senkrecht auf der Beleuchtungsrichtung steht. Dadurch ist der konfokale Überlagerungsbereich des Beleuchtungsvolumens mit dem Detektionsvolumen besonders klein und das Mikroskop erreicht eine fast isotrope Auflösung, deren Größenordnung der lateralen Auflösung eines konfokalen Mikroskops entspricht.

Dieses Theta-Mikroskop ist jedoch konfokal arrangiert, was hohe Anforderungen an die relative Justierung des Beleuchtungs- und des Detektionsbrennpunkts stellt. Außerdem ist es trotz eines großen Arbeitsabstands nicht ohne weiteres in der Lage, Aufnahmen von großen Objekten zu machen. Dies liegt daran, dass das Objekt im Theta-Mikroskop bei der Objektrasterung nicht genug Bewegungsfreiheit hat und dass es wegen der Punktdetektion in drei Richtungen gerastert werden muss, wodurch eine Aufnahme sehr lange dauert. Das Beleuchtungslicht wird zu einem Beleuchtungspunkt fokussiert.

Aus der Veröffentlichung "Imaging the intact guinea pig tympanic bulla by orthogonal-plane fluorescence optical sectioning microscopy", Voie, Hearing Research 171 (2002), S. 119-128 ist ein Mikroskop zur Aufnahme von Bildern eines zu untersuchenden Objekts bekannt. Dieses Mikroskop hat einen Beleuchtungsstrahlengang und einen orthogonal angeordneten Detektionsstrahlengang. Eine Fokussieranordnung aus einer zylindrischen Linse ist in dem Beleuchtungsstrahlengang angeordnet und erzeugt einen flächenartigen Objektbeleuchtungsbereich. Das Mikroskop der Voie-Veröffentlichung hat eine Bewegungsanordnung, welche eine Relativbewegung zwischen dem Objektbeleuchtungsbereich und dem zu untersuchenden Objekt erzeugt.

Die japanische Patentanmeldung mit der Veröffentlichungs-Nr. JP 07-253309 offenbart ein Verfahren zur Erleichterung der Fokussierung eines Liniensensors an einem Laserstrahl in einem mikroskopischen Partikel-Detektor. Es ist daraus eine Vorrichtung bekannt, bei der Partikel in einem Luftstrom durch einen dünnen Laserstrahl beleuchtet werden und das an den Partikeln seitlich gestreute Licht auf einen Liniensensor abgebildet wird.

Die der vorliegenden Erfindung zugrundeliegende Aufgabe besteht darin, ein Mikroskop vorzuschlagen, das für die hochauflösende dreidimensionale Beobachtung von millimetergroßen biologischen Objekten geeignet ist, wobei eine schnelle Aufnahme der Daten möglich ist und der Aufbau technisch möglichst einfach zu realisieren ist.

Diese Aufgabe wird erfindungsgemäß durch das im Anspruch 1 angegebene Mikroskop gelöst. Die Probe wird durch einen dünnen linienartigen Lichtstreifen beleuchtet und die Beobachtung erfolgt senkrecht zu diesem Objektbeleuchtungsbereich, der eine strahlenartig bzw. linienartig Ausdehnung hat. Die Dicke des Beleuchtungslichtstreifens bestimmt somit zu wesentlichen Teilen die Schärfentiefe des Systems. Für die Bildaufnahme wird das Objekt durch den raumfesten Lichtstreifen bewegt, und Fluoreszenz- oder/und Streulicht werden in jeder Position der Rasterbewegung mit einem flächigen Detektor in langgestreckten Bereichen aufgenommen. Da das Objekt in der bevorzugten Ausführungsform rotiert werden kann, ist es möglich, solche dreidimensionalen Aufnahmen von mehreren Seiten zu machen und sie zu einer einzigen dreidimensionalen Aufnahme zu kombinieren, deren Auflösung im Wesentlichen durch die laterale Auflösung der einzelnen Aufnahmen bestimmt wird. Die hohe Auflösung dieser Aufnahme ist das Ergebnis der fokussierten Beleuchtung, der senkrechten Detektion, der Bewegung des Objekts und der Kombination der einzelnen Aufnahmen durch Bildverarbeitung.

Das erfindungsgemäße Mikroskop verfügt über einen Beleuchtungslichtpfad und einen Detektionslichtpfad, die im Objektbeleuchtungsbereich vorzugsweise orthogonal zueinander stehen, wodurch die Detektionsrichtung senkrecht auf der Beleuchtungslichtebene steht. Jedoch werden die Vorteile der Erfindung in ausreichendem Maße auch darin noch erzielt, wenn der Winkel zwischen der Beleuchtungs-und der Detektionsrichtung bzw. zwischen der Beleuchtungslichtebene und der Detektionsrichtung in nicht zu großem Maße von einem rechten Winkel abweicht.

Vorteilhafterweise wird als Lichtquelle ein Laser eingesetzt, der die selektive Anregung von Fluoreszenzemission in der Probe ermöglicht.

Das detektierte Licht ist vorzugsweise Fluoreszenzlicht. Möglich ist aber auch die Detektion von Streulicht. Das Detektionslicht wird vorzugsweise mit einem telezentrischen System aus zwei Objektiven auf den langgestreckten Bereichen des Detektors abgebildet. Geeignet sind aber auch andere optische Baugruppen.

Die Detektion erfolgt vorzugsweise mit einem flächigen Detektor, der das ganze Feld detektiert, beispielsweise einer CCD-Kamera. Durch die Verwendung eines solchen Detektors ist eine schnelle Bildaufnahme möglich, und die Bewegung der Probe für eine dreidimensionale Aufnahme ist auf eine Richtung (nämlich längs der Detektionsachse) beschränkt. Die Auflösung des Systems wird durch die laterale Auflösung der Detektionsoptik bestimmt.

Da die Fläche der derzeit verfügbaren Detektoren im allgemeinen nicht ausreicht um eine vollständige, hochaufgelöste Aufnahme von mehreren Millimeter großen Objekten zu gewährleisten, besteht in einer Ausführungsform des erfindungsgemäßen Mikroskops die Möglichkeit, den Detektor in der Detektionsebene, also im Wesentlichen seitlich zur Detektionsrichtung, zu bewegen, um Bilder von Teilen des Objekts aufzunehmen, die zu einem Bild des gesamten Objekts zusammengesetzt werden können.

In einem einfachen, bevorzugten Aufbau werden keine optischen Elemente zur Führung der Strahlengänge verwendet. Es können aber beispielsweise Spiegel, dichroitische Spiegel, Strahlteiler oder optische Fasern für die Führung der Strahlengänge eingesetzt werden. Da in dem erfindungsgemäßen Mikroskop die Beleuchtungs- und Detektionsstrahlengänge getrennt sind, kann auf den in anderen Fluoreszenzmikroskopen üblichen Einsatz passiver Bauteile wie dichroitischer Spiegel oder aktiver, beispielsweise akusto-optischer Bauteile, für die Trennung von Beleuchtungs- und Fluoreszenzlicht verzichtet werden.

Es besteht die Möglichkeit, den Aufbau zum Beispiel durch einen weiteren Beleuchtungslichtpfad zu ergänzen, dessen Licht zu einem Streifen bzw. Objektbeleuchtungsbereich fokussiert wird, der vorzugsweise in der gleichen Ebene wie der Objektbeleuchtungsbereich des ersten Beleuchtungslichtpfads liegt, so dass eine bessere Ausleuchtung der Probe erreicht wird.

Das Licht für diesen weiteren Beleuchtungslichtpfad kann aus derselben Lichtquelle kommen. Vorteilhafterweise wird die Probe hierbei aus zwei gegenüberliegenden Richtungen beleuchtet. Im Gegensatz zu der 4Pi-konfokalen Mikroskopie [S. Hell und E. H. K. Stelzer, J. Opt. Soc. Am. A 9, 2159(1992)] ist der Justieraufwand in dem erfindungsgemäßen Mikroskop gering, denn es müssen nur zwei mehrere Mikrometer dicke Lichtstreifen überlagert werden. Außerdem muss die Phase der Strahlen nicht berücksichtigt werden.

Das erfindungsgemäße Mikroskop kann aber auch als nicht-konfokales 4Pi- Theta-Mikroskop betrieben werden. Hierbei wird die Probe wie in einem 4Pi (A)-konfokalen Mikroskop aus zwei entgegengesetzten Richtungen kohärent beleuchtet, so dass längs dieser Beleuchtungsachse ein Interferenzmuster auftritt, das die Intensität in der Beleuchtungslichtebene räumlich moduliert. Dadurch wird das Beleuchtungsvolumen halbiert, und durch ein Verschieben des Interferenzmusters (durch eine Verstellung der Phasendifferenz zwischen den Strahlen) ist es möglich, sich ergänzende Bereiche der Probe zu beleuchten, so dass ein Bild mit erhöhter Auflösung längs der Beleuchtungsachse rekonstruiert werden kann.

Es besteht die Möglichkeit, den Aufbau z. B. durch einen weiteren Detektionslichtpfad zu ergänzen, durch den Licht detektiert wird, das in entgegengesetzter Richtung zum bestehenden Detektionslichtpfad emittiert wird. Dadurch kann die Detektion des Lichts stets so erfolgen, dass das Licht einen möglichst kurzen Weg durch die Probe zurücklegt.

Zusätzlich können auch Streulichtdetektoren oder/und Transmissionslichtdetektoren vorgesehen sein.

Es ist zwar möglich, die Probe in dem erfindungsgemäßen Mikroskop auf einen Probentisch zu legen oder in Luft zu halten, jedoch wird die Probe vorzugsweise durch eine Halterung von oben in einer wassergefülltem Probenkammer gehalten und kann um die senkrechte, also in Schwerkraftrichtung liegende Achse gedreht werden. Dies hat den Vorteil, dass bei der Drehung der Probe für eine Aufnahme aus einer anderen Richtung keine Veränderung der auf die Probe wirkende Schwerkraft erfolgt und sie sich nicht verformt. Vorteilhafterweise wird bei einer solchen Drehung der Probe in der Probenkammer die Probenkammer nicht bewegt, so dass sich die optischen Weglängen (abgesehen von Unterschieden durch den Brechungsindex in der Probe selbst) während des Bewegungsvorgangs nicht ändern. Dies führt zu einer besseren Bildqualität. Vorteilhafterweise kann die auf diese Art gehaltene Probe so ausgerichtet werden, dass der Einfluss von stark streuenden oder absorbierenden Teilen der Probe bei der Bildaufnahme minimiert wird.

Es ist in einer weiteren Ausführungsform des erfindungsgemäßen Mikroskops auch möglich, die Beleuchtungs- und Detektionspfade um das raumfeste zu untersuchende Objekt zu drehen. Dann muss jedoch die Probe bzw. das Objekt im Allgemeinen nachgeführt werden, um in weiteren Aufnahmen abgebildet zu werden.

Das zu untersuchende Objekt befindet sich bei einer Aufnahme in dem strahlenartig bzw. linienartig Objektbeleuchtungsbereich, wobei das Objekt wesentlich größer als die Dicke dieses Bereichs ist. Eine zweidimensionale Aufnahme der sich in diesem Bereich befindlichen Teile des Objekts erfolgt durch den flächigen Detektor. Eine dreidimensionale Aufnahme des Objekts erfolgt durch Rasterung des Objekts in Detektionsrichtung durch den raumfesten Beleuchtungsbereich (oder durch Rasterung des Beleuchtungsbereichs durch das Objekt), wobei in jeder Position des Objekts ein zweidimensionales Bild aufgenommen wird. Die Synchronisation von Bewegung, Beleuchtung und Detektion wird vorteilhafterweise optimiert, um die Probenbela- stung zu minimieren.

Vorzugsweise wird die Drehung des Objekts (ebenso wie die lineare Rasterbewegung) elektronisch gesteuert, so dass die Aufnahme mehrerer Bilder aus verschiedenen Winkeln automatisiert werden kann und die Geschwindigkeit der Probenuntersuchung erhöht wird. Die Anzahl der Bilder und die Drehwinkel der Probe, die für eine Gesamtaufnahme mit einer bestimmten räumlichen Auflösung notwendig sind, können zugunsten einer kurzen Probenuntersuchungszeit und damit einer geringen Probenbelastung optimiert werden.

Vorteilhafterweise kann das zu untersuchende Objekt auch um die Beleuchtungsachse gekippt werden, so dass es noch aus zusätzlichen Richtungen beobachtet werden kann. In einer weiteren Ausführungsform des erfindungsgemäßen Mikroskops ist ein zweiter Detektionslichtpfad vorhanden, der die Detektion des nach unten emittierten Lichts erlaubt.

Vorteilhafterweise kann die Halterung vieler biologischer Proben einfach durch Einbetten in ein Gel (ca. 99% Wasser) oder eine andere polymerisierende oder sich vernetzende Struktur realisiert werden.

Die durch Drehung des zu untersuchenden Objekts realisierten Aufnahmen aus verschiedenen Richtungen erlauben eine dreidimensionale Rekonstruktion desselben durch die Kombination der einzelnen dreidimensionalen Rohdatensätze. Da bei der bevorzugten Ausführungsform des Mikroskops nur ein Teil der Probe optimal abgebildet wird (im allgemeinen die beiden Oktanten, die innerhalb des rechten Winkels zwischen Beleuchtungs-und Detektionsachse liegen), sind mindestens vier Aufnahmen für eine gute Rekonstruktion der gesamten Probe notwendig.

Diese Aufnahmen lassen sich so kombinieren, dass die Rekonstruktion eine höhere Auflösung bietet als die einzelnen Aufnahmen. Die Qualität des rekonstruierten Bilds lässt sich durch Aufnahmen entlang weiterer Winkel verbessern, so dass die toten Winkel der gemeinsamen optischen Übertragungsfunktion aufgefüllt werden.

Durch die Verwendung von Objektiven mit langen Brennweiten steht ein Arbeitsabstand von mehreren Millimetern zur Verfügung. Die Größe des Objekts wird dadurch in erster Linie durch seine Lichtdurchlässigkeit begrenzt: Sofern man das Objekt vollständig (und nicht nur die Randschichten) untersuchen will, muss hinreichend Licht aus jedem Teil von ihm in der einen oder anderen Orientierung den Detektor erreichen.

Wie vorangehend bereits ausgeführt, kann es in Abhängigkeit von der Vergrößerung des optischen Systems im Detektionsstrahlengang erforderlich sein, den dem Detektionsstrahlengang zugeordneten Detektor zu verschieben, um, im Wesentlichen bedingt durch die begrenzte Anzahl der Detektorpixel bei zweidimensionalen Pixeldetektoren, ein vollständiges Bild des zu untersuchenden Objekts aufnehmen zu können. Das heißt, die Auflösung des Gesamtsystems ist im Wesentlichen nicht durch die numerische Apertur der optischen Komponenten, insbesondere der verwendeten Linsen, und somit durch die Auflösung in der Probe selbst begrenzt, sondern mehr durch die technischen Limitationen, die im Bereich von Pixeldetektoren, wie sie beispielsweise in CCD-Kameras Anwendung finden, vorhanden sind. Diesem Problem kann entgegengetreten werden durch den Einsatz hochauflösender Pixeldetektoren mit einer Pixelzahl im Bereich von mehreren Millionen, wie sie beispielsweise in der Astronomie oder der digitalen Fotografie eingesetzt werden. Diese Pixeldetektoren sind jedoch vergleichsweise teuer und langsam.

Die vorliegende Erfindung sieht ein Mikroskop mit wenigstens einem Beleuchtungsstrahlengang und wenigstens einem Detektionsstrahlengang vor, das dadurch gekennzeichnet ist, dass bei jedem Beleuchtungsstrahlengang eine Fokussieranordnung vorgesehen ist zur Erzeugung eines in Richtung einer Beleuchtungsachse des Beleuchtungsstrahlengangs ausgedehnten linienartigen Objektbeleuchtungsbereichs, dass eine Detektionsrichtung des wenigstens einen Detektionsstrahlengangs näherungsweise orthogonal zu dem linienartigen Objektbeleuchtungsbereich steht, und dass wenigstens eine Bewegungsanordnung vorgesehen ist zur Erzeugung einer Relativbewegung zwischen dem linienartigen Objektbeleuchtungsbereich und einem zu untersuchenden Objekt.

Gemäß der vorliegenden Erfindung wird also der Objektbeleuchtungsbereich im Wesentlichen auf eine Dimension, nämlich die Längsdimension, begrenzt, so dass von der vorangehend diskutierten flächenartigen Struktur des Objektbeleuchtungsbereichs zu einer langgestreckten bzw. linienartigen Struktur übergegangen wird. Mit diesem linienartigen Objektbeleuchtungsbereich werden entsprechend auch nur linienartige Abschnitte eines zu untersuchenden Objekts ausgeleuchtet und zur Fluoreszenz angeregt bzw. zur Lichtstreuung genutzt. Diese nunmehr erzeugten linienartigen beleuchteten Bereiche können durch den oder die Detektionsstrahlengänge auf Pixeldetektoren abgebildet werden, die eine langgestreckte Struktur haben, also im Wesentlichen in einer Dimension aufeinander folgend angeordnete Pixel aufweisen. Derartige im Prinzip als "ein-dimensionale" Pixeldetektoren zu interpretierende Detektoren können mit wesentlich höherer Pixelzahl beispielsweise bis zu 8000 Pixeln bereitgestellt werden. Die durch den linienartigen Objektbeleuchtungsbereich nunmehr ausgeleuchteten und im Detektor abgebildeten Abschnitte eines zu untersuchenden Objekts können somit mit entsprechend hoher Auflösung auch im Detektor selbst aufgenommen und entsprechend in hochaufgelöste Bilder umgesetzt werden. Da die Dimension der bei derartigen Pixeldetektoren vorhandenen Pixel quer zur Längserstreckung des Pixeldetektors im Allgemeinen deutlich kleiner sein wird, als die Breite des Bildes des linienartigen Objektbeleuchtungsbereichs in dieser Richtung, auch unter Berücksichtigung der im Detektionsstrahlengang erzeugten Vergrößerung, kann es vorteilhaft sein, zu langgestreckten "zweidimensionalen" Pixeldetektoren überzugehen, die beispielsweise eine Pixelzahl von 64 x 4096 aufweisen, also in der Längsrichtung des Objektbeleuchtungsbereichs bzw. des entsprechenden Bildes desselben eine wesentlich größere Pixelanzahl als quer dazu aufweisen.

Um mit einem derartigen System dann ein zu untersuchendes Objekt vollständig abbilden zu können bzw. ein komplettes Bild davon erzeugen zu können, kann eine Rasterung zwischen dem zu untersuchenden Objekt und dem Beleuchtungsstrahlengang bzw. dem Detektionsstrahlengang erfolgen, so dass im Prinzip das zu untersuchende Objekt linienartig abgetastet wird und die einzelnen dabei erzeugten Linienbilder dann zu einem gesamten Bild zusammengesetzt werden können.

Um dies zu erreichen, kann beispielsweise vorgesehen sein, dass die wenigstens eine Bewegungsanordnung dazu ausgebildet ist, eine Relativbewegung zwischen dem Objekt und dem linienartigen Objektbeleuchtungsbereich im Wesentlichen orthogonal zur Beleuchtungsachse und zur Detektionsrichtung zu erzeugen. Hierzu kann beispielsweise vorgesehen sein, dass die wenigstens eine Bewegungsanordnung dazu ausgebildet ist, das Objekt zur Erzeugung einer Relativbewegung zu bewegen.

Alternativ oder zusätzlich zu dieser Verlagerung des zu untersuchenden Objekts kann auch vorgesehen sein, dass die wenigstens eine Bewegungsanordnung dazu ausgebildet ist, den wenigstens einen Beleuchtungsstrahlengang wenigstens in dem durch diesen bereitgestellten linienartigen Objektbeleuchtungsbereich zur Erzeugung der Relativbewegung zu bewegen. Da dabei bei beispielsweise festgehaltenem Objekt der Objektbeleuchtungsbereich verschoben wird, ist es dann erforderlich, dass die wenigstens eine Bewegungsanordnung dazu ausgebildet ist, den wenigstens einen Detektionsstrahlengang in Anpassung an die Bewegung des wenigstens einen Beleuchtungsstrahlengangs wenigstens in seinem objektnahen Bereich zu bewegen.

Wie bereits vorangehend ausgeführt, kann der wenigstens eine Detektionsstrahlengang einen Detektor mit einer Vielzahl an Detektorpixeln aufweisen, wobei dann vorzugsweise vorgesehen sein kann, dass die Anzahl und die Positionierung der Detektorpixel des Detektors derart gewählt sind, dass der wenigstens eine Detektionsstrahlengang einen durch den wenigstens einen Beleuchtungsstrahlengang im Objektbeleuchtungsbereich beleuchteten Abschnitt des Objekts im Wesentlichen vollständig auf den Detektor abbildet.

Um mit dem erfindungsgemäßen System nicht nur eine flächenmäßige Abbildung eines zu untersuchenden Objekts erzeugen zu können, sondern dieses auch durch dreidimensionales Abtasten dreidimensional abbilden zu können, wird weiter vorgeschlagen, dass die wenigstens eine Bewegungsanordnung dazu ausgebildet ist, das zu untersuchende Objekt im Wesentlichen in Richtung der Detektionsrichtung des wenigstens einen Detektionsstrahlengangs zu bewegen.

Aus den vorangehenden Erläuterungen wird offensichtlich, dass es ein wesentliches Prinzip der vorliegenden Erfindung ist, mit wenigstens einem Beleuchtungsstrahlengang einen langgestreckten Objektbeleuchtungsbereich zu erzeugen, in dem dann ein zu untersuchendes Objekt positioniert werden kann, um durch Fluoreszenzanregung oder durch Streulichterzeugung in wenigstens einem Detektionsstrahlengang ein Bild des im Objektbeleuchtungsbereich positionierten Abschnitts des zu untersuchenden Objekts oder ggf. des gesamten Objekts zu erzeugen.

Gemäß der vorliegenden Erfindung wird daher weiter ein Mikroskop vorgeschlagen, das wenigstens einen Beleuchtungsstrahlengang und wenigstens einen Detektionsstrahlengang aufweist und dadurch gekennzeichnet ist, dass bei jedem Beleuchtungsstrahlengang eine Fokussieranordnung vorgesehen ist zur Erzeugung eines in Richtung einer Beleuchtungsachse des-Beleuchtungsstrahlengangs ausgedehnten Objektbeleuchtungsbereichs, dass eine Detektionseinrichtung des wenigstens einen Detektionsstrahlengangs näherungsweise orthogonal zu dem Objektbeleuchtungsbereich steht, und dass eine Bewegungsanordnung vorgesehen ist zur Erzeugung einer Relativbewegung zwischen dem Objektbeleuchtungsbereich und einem zu untersuchenden Objekt.

Die Erfindung wird nachstehend anhand der beigefügten Zeichnungen näher erläutert. Es zeigen:
- Fig. 1: die schematische Darstellung des Strahlengangs eines Mikroskops, wobei ein einziger Beleuchtungsstrahlengang und ein einziger Detektionsstrahlengang vorhanden sind, betrachtet in Blickrichtung I der Fig. 2;
- Fig. 2: die in Fig. 1 dargestellte Ausführungsform in Blickrichtung II in Fig. 1;
- Fig. 3: eine Prinzipdarstellung des Beleuchtungsstrahlengangs, der von einer Zylinderlinse ausgeht und einen Objektbeleuchtungsbereich im Bereich einer Fokuslinie bildet;
- Fig. 4: eine Draufsicht auf den Strahlengang der Fig. 3 in Blickrichtung IV in Fig. 3;
- Fig. 5: die schematische Darstellung des Strahlengangs in einer weiteren Ausführungsform des Mikroskops, wobei zwei Beleuchtungsstrahlengänge vorhanden sind;
- Fig. 6: eine weitere Prinzipdarstellung eines Mikroskops;
- Fig. 7: eine der Fig. 1 entsprechende Ansicht des erfindungsgemäßen Mikroskops.

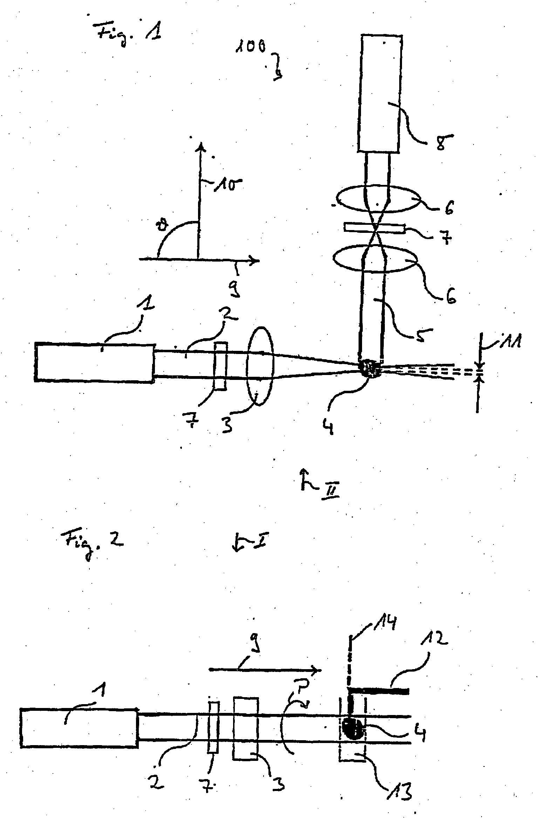

Die Fig. 1 zeigt eine Ausführungsform eines Mikroskops 100. Der Aufbau umfasst eine Lichtquelle 1, deren kollimierter Lichtstrahl 2 durch eine Zylinderlinse 3 in die Probe 4 fokussiert wird. Dabei entsteht ein dünner vertikaler Lichtstreifen 11, durch den in der Probe 4 Fluoreszenzemission induziert werden kann. Das emittierte Licht 5 wird durch eine Detektionsoptik 6 auf den flächigen Detektor 8, beispielsweise eine CCD-Kamera abgebildet.

Durch die rechtwinklige Anordnung (= 90 Grad) von Beleuchtungs- 9 und Detektionsrichtung 10 ist der Aufbau besonders einfach. Insbesondere kann auf den Einsatz dichroitischer Spiegel für die Trennung von Beleuchtungs- und Fluoreszenzlicht im Detektionsstrahlengang 5 verzichtet werden. Die Filter 7 im Beleuchtungs- 2 und im Detektionsstrahlengang 5 sind Glasfilter oder akusto-/elektro-/magneto-optische Filter und erlauben die selektive Auswahl von Wellenlängen für die Beleuchtung und die Detektion.

Die Probe 4 wird durch eine Halterung 12 in einer Probekammer 13 gehalten und für die Bildaufnahme in Detektionsrichtung 10 durch die raumfeste Lichtebene 11 bewegt. Die Halterung 12 erlaubt außerdem die Drehung der Probe 4 um ihre senkrechte Achse 14, so dass die Probe 4 von mehreren Seiten beleuchtet und beobachtet werden kann.

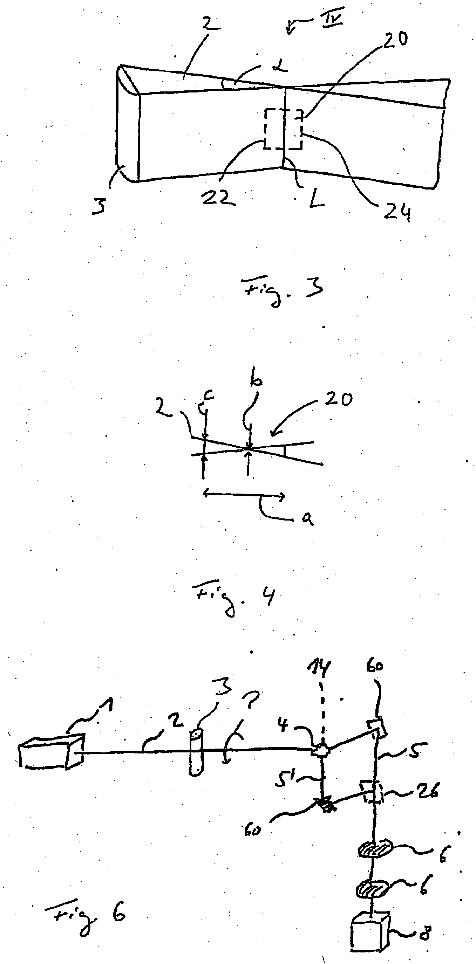

Die Fig. 3 und 4 zeigen in prinzipieller Art und Weise den vorangehend angesprochenen und unter Einsatz der Zylinderlinse 3 erzeugten Beleuchtungsstrahlengang 2. Durch die Zylinderlinse 3, deren Brennweite vorzugs- weise im Bereich zwischen 10 mm und 100 mm liegen kann, wird das von der Lichtquelle 1 emittierte Licht unter einem vergleichsweise kleinen Winkel α fokussiert. Es entsteht im Bereich einer Fokuslinie L somit ein in der Fig. 3 strichliert eingezeichneter Objektbeleuchtungsbereich 20, der näherungsweise eine flächenartige bzw. ebenenartige Struktur bzw. Ausdehnung hat und beiderseits der Fokuslinie durch Zylinderabschnitte gebildet ist. Bei einer in Richtung der Beleuchtungsachse bzw. Beleuchtungsrichtung gemessenen Abmessung a dieses Objektbeleuchtungsbereichs 20 von etwa 5 mm und einer Dickenabmessung des Beleuchtungsstrahlengangs 2 im Bereich der Fokuslinie b von etwa20 µm ergibt sich an den in Beleuchtungsrichtung gelegenen Endbereichen 22, 24 des Objektbeleuchtungsbereichs 20 eine Dickenabmessung c von näherungsweise 60 µm, was natürlich abhängt von der für die Zylinderlinse 3 vorgegebenen numerischen Apertur. Über den gesamten Objektbeleuchtungsbereich 20 hinweg ist also eine - bezogen auf die Abmessung der zu untersuchenden Objekte - vernachlässigbare Variation der Dicke des Objektbeleuchtungsbereichs 20 im Beleuchtungsstrahlengang 2 vorhanden, so dass insbesondere auch unter Berücksichtigung der Abmessungen der zu untersuchenden Objekte hier von einer in erster Näherung konstanten Dicke des Objektbeleuchtungsbereichs und somit einer flächenartigen bzw. ebenenartigen Struktur desselben ausgegangen werden kann.

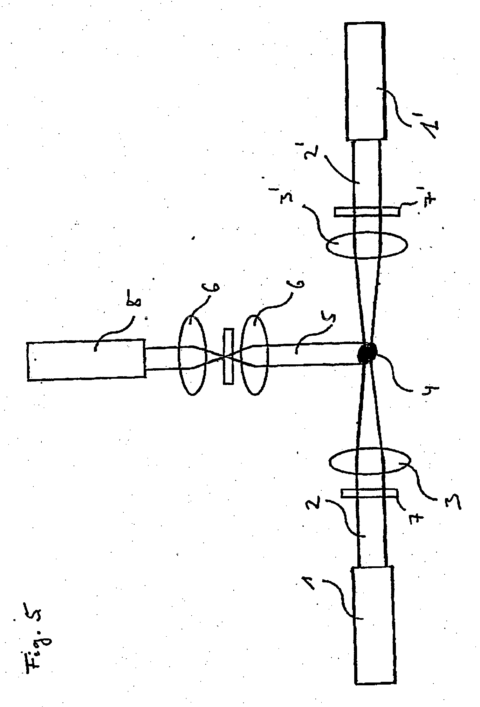

In der Fig. 5 ist eine abgewandelte Ausgestaltungsform des Mikroskops 100 dargestellt, bei welcher zwei Beleuchtungsstrahlengänge 2, 2' vorhanden sind. Im dargestellten Falle weist jeder dieser beiden Beleuchtungsstrahlengänge 2, 2', die einander entgegengesetzt gerichtete Beleuchtungsrichtungen, jedoch einander entsprechende Beleuchtungsachsen aufweisen, jeweils eine Zylinderlinse 3, 3' mit ggf. zugeordnetem Filter 7, 7' sowie eine Lichtquelle 1, 1' auf. Bei einer Abwandlung dieser Ausgestaltungsform kann weiter vorgesehen sein, dass nur eine einzige Lichtquelle vorgesehen ist. Dabei entsteht durch Überlagerung der beiden Objektbeleuchtungsbereiche dieser Beleuchtungsstrahlengänge 2, 2', welche Objektbeleuchtungsbereiche vorangehend mit Bezug auf die Fig. 3 und 4 detaillierter geschildert worden sind, ein dünner vertikaler Lichtstreifen, der im Vergleich zu dem Lichtstreifen in der in Fig. 1 dargestellten Ausführungsform homogener ist. Das emittierte Licht 5 wird durch eine Detektionsoptik 6 auf den flächigen Detektor 8 abgebildet. Diese Ausführungsform des Mikroskops eignet sich besonders für absorbierende Proben, bei denen mit einer einseitigen Beleuchtung nicht die gesamte Probe beleuchtet werden kann.

Bei dieser Ausgestaltungsform besteht die Möglichkeit, die beiden Beleuchtungsstrahlengänge 2, 2' bzw. die Lichtstrahlen derselben durch definierte Einstellung der Phasenlage dieser Lichtstrahlen zueinander dort, wo die beiden Objektbeleuchtungsbereiche dieser beiden Beleuchtungsstrahlengänge 2, 2' einander überlagert sind, gezielt zur Interferenz zu bringen. Auf diese Art und Weise wird es möglich, in demjenigen Bereich, in dem das zu untersuchende Objekt bzw. Probe 4 zu beleuchten ist, durch destruktive Interferenz bestimmte Abschnitte auszublenden bzw. durch konstruktive Interferenz bestimmte Bereiche hervorzuheben, wodurch die Auflösung des Gesamtsystems weiter verbessert werden kann.

In Fig.6 ist eine weitere Abwandlung des Mikroskops 100 angedeutet. Durch den Pfeil P wird angedeutet, dass die dort gezeigte Zylinderlinse 3 um die Beleuchtungsachse des Beleuchtungsstrahlengangs 2 gedreht werden kann, beispielsweise um 90°. Damit dreht sich auch der Objektbeleuchtungsbereich 20 dieses Beleuchtungsstrahlengangs 2, so dass er ausgehend von der in Fig. 2 gezeigten Orientierung, in welcher er im Wesentlichen in der Zeichenebene liegt, um 90° gedreht ist und dann senkrecht zur Zeichenebene steht. Auf diese Art und Weise wird es möglich, das zu untersuchende Objekt 4 aus einer anderen Richtung zu betrachten, nämlich der in der Darstellung der Fig. 2 unter diesem Objekt 4 liegenden Richtung. Es kann also ein weiterer Detektionsstrahlengang 5' vorgesehen sein, bei welchem dann bezüglich des in der Fig. 1 erkennbaren Detektionsstrahlengangs 5 das zu untersuchende Objekt 4 unter einem Winkel von 90° betrachtet werden kann, ohne dass dieses Objekt 4 selbst gedreht worden wäre.

Bei einem derartigen System ist es beispielsweise möglich, unter Einsatz von Spiegeln 60 und eines Kippspiegels 26 verschiedene Detektionsstrahlengänge 5, 5' wahlweise, je nach Stellung des Kippspiegels 26 zu ein und demselben Detektor 8 bzw. ein und demselben optischen System mit Objektiven 6 zu leiten. In Zuordnung zur Drehstellung der Zylinderlinse 3 wird also dann der Kippspiegel 26 entsprechend umgeschaltet. Selbstverständlich ist es möglich, zwei Detektionsstrahlengänge 5, 5' mit jeweils zugeordneter Objektivanordnung und Detektor voneinander unabhängig und beispielsweise unter einem Winkel von 90° vorzusehen. Weiter ist es möglich, zumindest eines dieser Systeme dann bewegbar zu gestalten, so dass es zusammen mit der Zylinderlinse 3 um die Beleuchtungsachse des Beleuchtungsstrahlengangs 2 in Fig. 2 gedreht werden kann, so dass bei gleichzeitiger Drehung der Zylinderlinse 3 und dieses Detektionsstrahlengangs dann eine Rundumaufnahme des zu untersuchenden Objekts 4 erzeugt werden kann, ohne dass dieses Objekt selbst bewegt worden wäre

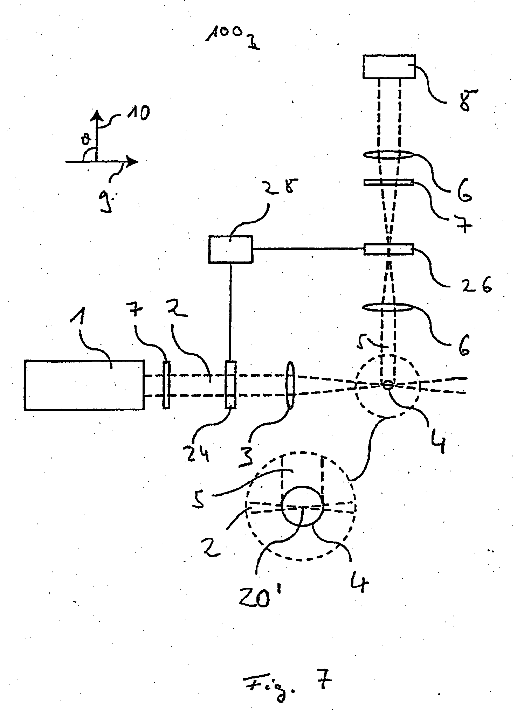

Das erfindungsgemäße Mikroskop 100 ist in Fig. 7 dargestellt. Der grundsätzliche Aufbau bzw. auch die Betrachtungsweise sind so wie in Fig. 1, so dass allgemein auf die voranstehenden Ausführungen verwiesen werden kann. Es ist wieder ein im Wesentlichen durch den Lichtstrahl 2 bereitgestellter Beleuchtungsstrahlengang vorhanden, der unter Einsatz eines optischen Systems fokussiert wird, um einen Objektbeleuchtungsbereich 20' zu generieren. Die hier eingesetzte Linse 3 ist nunmehr keine Zylinderlinse, sondern eine bezüglich der Beleuchtungsachse 9 des Beleuchtungsstrahlengangs rotationssymmetrische Linse. Auf diese Art und Weise wird ein Objektbeleuchtungsbereich 20' erzeugt, der im Wesentlichen ebenfalls rotationssymmetrisch ist und somit insbesondere in demjenigen Bereich, in welchem auch das zu untersuchende Objekt 4 bzw. die Probe positioniert ist, als linearer Objektbeleuchtungsbereich bzw. linienartiger Objektbeleuchtungsbereich interpretiert werden kann. Die Abmessung dieses im Wesentlichen rotationssymmetrischen, linienartigen Objektbeleuchtungsbereichs kann, natürlich abhängig von der Brennweite der Linse 3 bzw. des eingesetzten optischen Systems im Zentrum im Bereich von 10 - 20 µm liegen, während in den Randbereichen eine Abmessung im Bereich von 40 - 60 µm vorliegt.

Bei diesem in Fig. 7 gezeigten erfindungsgemäßen Mikroskop 100 wird also bei Positionierung einer Probe 4 im Objektbeleuchtungsbereich 20' kein scheiben- oder flächenartiger Bereich der Probe 4 ausgeleuchtet, sondern ein entsprechend linienartiger Bereich. Das im Detektionsstrahlengang 5 erzeugte Bild dieses linienartig ausgeleuchteten Bereichs wird über das optische System desselben auf den Detektor 8 abgebildet, so dass dort ein ggf. vergrößertes Linienbild generiert wird. Der Detektor 8 ist als Pixeldetektor aufgebaut und weist in Anpassung an das nunmehr erzeugte linienartige Bild eine mehr "eindimensionale" Pixelanordnung auf. Bei dieser Anordnung ist die Positionierung der Pixel so, dass eine wesentlich größere Anzahl der Pixel in der Längsrichtung des erzeugten linienartigen Bildes aufeinander folgt, als quer dazu. Vorzugsweise ist die Anzahl der Pixel in der Längsrichtung bzw. der Querrichtung so gewählt, dass das im Detektionsstrahlengang 5 erzeugte linienartige Bild vollständig durch den Detektor 8 aufgenommen werden kann, ohne diesen bewegen zu müssen. Im Extremfall ist es jedoch auch möglich, eine einzige Reihe von Pixeln vorzugehen. Hierbei ist zu berücksichtigen, dass mit abnehmender Breite eines derartigen Pixelfeldes und mehr und mehr auftretendem Übergang zu einer einzigen Pixellinie die Anzahl der in einer solchen linienartigen Anordnung vorhandenen Pixel erhöht werden kann und insofern die Auflösung des Detektors 8 in dieser Richtung entsprechend erhöht werden kann.

Um mit diesem in Fig. 7 dargestellten nunmehr auch bedingt durch den möglichen Aufbau des Detektors 8 hochauflösenden Mikroskop 100 vollständige Bilder der Probe 4 erzeugen zu können, wird erfindungsgemäß eine Relativbewegung dieser Probe 4 bezüglich des linienartigen Objektbeleuchtungsbereichs 20' erzeugt. Hierzu gibt es grundsätzlich verschiedene Möglichkeiten. Zum einen kann die Probe 4 orthogonal zum linienartigen Objektbeleuchtungsbereich und auch orthogonal zum Detektionsstrahlengang 5 verschoben werden, also in der Darstellung der Fig. 7 senkrecht zur Zeichenebene. Auf diese Art und Weise werden rasterartig nach und nachlinienartige Bereiche der Probe 4 ausgeleuchtet, so dass durch Zusammenfügen der entsprechend aufgenommenen Bilder ein Gesamtbild der Probe 4 in einer Ebene erzeugt werden kann. Um ein dreidimensionales Bild zu generieren, kann die Probe auch noch in Richtung des Detektionsstrahlengangs 5 bzw. der Detektionsrichtung 10 verschoben werden, so dass verschiedene Ebenen der Probe 4 durch die Fokalebene des Beleuchtungsstrahlengangs 5 hindurch bewegt werden.

Bei einer alternativen, in der Fig. 7 dargestellten erfindungsgemäßen Variante kann die Probe 4 ortsfest gehalten werden, während sowohl im Beleuchtungsstrahlengang 2 als auch im Detektionsstrahlengang 5 Vorrichtungen 24 und 26 vorgesehen sind, die für eine Verschiebung dieser beiden Strahlengänge 2, 5 in ihrem probennahen Bereich sorgen. Diese Vorrichtungen 24, 26 können beispielsweise Strahlenablenkeinheiten sein, die beispielsweise je einen verkippbaren Spiegel umfassen. Die beiden Strahlenablenkeinheiten 24, 26 stehen unter der Ansteuerung einer Steuervorrichtung 28, um ihre Bewegung aufeinander abzustimmen, so dass sichergestellt ist, dass auch immer derjenige Bereich der Probe 4, der momentan vom Objektbeleuchtungsbereich 20' ausgeleuchtet wird, durch den Detektionsstrahlengang 5 auf den Detektor 8 abgebildet wird. Auf diese Art und Weise ist ein Abscannen der ansonsten nicht senkrecht zur Zeichenebene der Fig. 7 zu bewegenden Probe in einer Ebene möglich. Auch hier kann zum Erhalten einer dreidimensionalen Darstellung dann die Probe 4 wieder in der Detektionsrichtung 10 verschoben werden, um aufeinander folgend mehrere Ebenen abzutasten.

Selbstverständlich ist es auch möglich, die beiden vorangehend angesprochenen Möglichkeiten zur Erzeugung einer Relativbewegung zwischen der Probe 4 einerseits und den Strahlengängen andererseits zu kombinieren, wobei zu berücksichtigen ist, dass das Bewegen der Strahlengänge schneller erfolgen kann, als das Bewegen der Probe.

Mit dem in Fig. 7 dargestellten erfindungsgemäßen System wird es also möglich, hochauflösende "eindimensionale" bzw. langgestreckte Pixelfelder im Detektor 8 einzusetzen, um somit entsprechend hochaufgelöste Bilder der jeweiligen ausgeleuchteten Bereiche der Probe 4 erzeugen zu können. Ein weiterer Vorteil dieses "Abtastens" der Probe 4 ist, dass die Lage des Objektbeleuchtungsbereichs verbessert auf das Sichtfeld der Detektionsoptik abgestimmt werden kann bzw. dass Bereiche, die nicht abgebildet werden sollen, auch überhaupt nicht abgetastet bzw. beleuchtet werden müssen und insofern auch keine Beeinträchtigung der Abtastung bzw. Abbildung anderer interessanterer Bereiche entsteht. Weiterhin wird durch diese Rasterbewegung des linienartigen Objektbeleuchtungsbereichs bezüglich der zu untersuchenden Probe über die Zeit hinweg eine Beleuchtungsebene bzw. ein flächiger Objektbeleuchtungsbereich generiert, der eine homogenere Intensität in Richtung der Relativbewegung aufweist, als dies bei entsprechender Strahlaufweitung bei den vorangehend beschriebenen Systemen der Fall ist, da das Intensitätsprofil im Objektbeleuchtungsbereich dort auch vom Intensitätsprofil des fokussierten Lichtstrahls abhängig ist. Darüber hinaus lassen sich durch die stärkere Fokussierung des Lichts höhere Intensitäten erreichen. Die Laserleistung wird so effizienter genutzt, was besonders bei schwacher Fluoreszenz oder bei Mehrphotonenanregung vorteilhaft ist.

Es sei darauf hingewiesen, dass selbstverständlich verschiedene Aspekte des erfindungsgemäßen Mikroskops, wie beispielsweise das Bereitstellen verschiedener Anzahlen an Beleuchtungsstrahlengängen und Detektionsstrahlengängen bzw. die Relativpositionierung und Phaseneinstellung derselben, die Maßnahmen zum Bewegen eines Objekts durch Verschiebung oder Drehung oder zum Bewegen des optischen Systems bei beispielsweise festgehaltenem Objekt, unabhängig davon realisiert sein können, ob der Objektbeleuchtungsbereich flächenartig ausgedehnt ist oder im Wesentlichen strahlenartig bzw. linienartig ausgebildet ist.

Die Erfindung betrifft ein Mikroskop, bei dem eine Schicht der Probe durch einen dünnen Lichtstreifen 11 beleuchtet wird und die Beobachtung senk- recht zu der Ebene des Lichtstreifens erfolgt. Die Dicke des Lichtstreifens 11 bestimmt somit wesentlich die Schärfentiefe des Systems. Für die Bildaufnahme wird das Objekt 4 durch den bezüglich des Detektors feststehenden Lichtstreifen 11 bewegt, und Fluoreszenz- oder/und Streulicht wird mit einem flächigen Detektor aufgenommen. Stark absorbierende oder stark streuende Objekte 4 werden aus mehreren Raumrichtungen beobachtet. Die dreidimensionalen Aufnahmen, die aus jeder Richtung gemacht werden, können nachträglich zu einer Aufnahme kombiniert werden, in der die Daten entsprechend ihrer Auflösung gewichtet werden. Die Auflösung der kombinierten Aufnahme wird dann durch die laterale Auflösung der einzelnen Aufnahmen dominiert.

## Patentansprüche

1. Mikroskop zur Erzeugung eines Bildes eines zu untersuchenden Objekts (4) z.B. eines millimetergroßen biologischen Objektes, wobei das Mikroskop eine Halterung (12) zum Halten des zu untersuchenden Objekts (4) und wenigstens einen Beleuchtungsstrahlengang (2) und wenigstens einen Detektionsstrahlengang (5)aufweist und wobei
- bei dem wenigstens einen Beleuchtungsstrahlengang (2) eine Fokussieranordnung (3) vorgesehen ist zur Erzeugung eines Objektbeleuchtungsbereichs (20'),
- eine Detektionsrichtung (10) des wenigstens einen Detektionsstrahlengangs (5) näherungsweise orthogonal zu dem Objektbeleuchtungsbereich (20') steht, und
- wenigstens eine Bewegungsanordnung (24, 26, 28) vorgesehen ist zur Erzeugung einer Relativbewegung zwischen dem Objektbeleuchtungsbereich (20') und dem zu untersuchenden Objekt (4), **dadurch gekennzeichnet, dass**
die Fokussieranordnung (3) eine bezüglich einer Beleuchtungsachse des Beleuchtungsstrahlengangs (2) rotationssymmetrische Linse umfasst, so dass der Objektbeleuchtungsbereich (20') in Richtung der Beleuchtungsachse des Beleuchtungsstrahlengangs (2) linienartig ausgedehnt ist und linienartige Abschnitte des zu untersuchenden Objekts (4) ausleuchtet, und
die Detektionsrichtung (10) näherungsweise orthogonal zu dem linienartigen Objektbeleuchtungsbereich (20') steht, wobei ein im Detektionsstrahlengang (5) erzeugtes linienartiges Bild der linienartig ausgeleuchteten Abschnitte des zu untersuchenden Objekts (4) auf einen Pixeldetektor (8) abgebildet wird und wobei in dem Detektor (8) langgestreckte Pixelfelder eingesetzt werden, die eine größere Anzahl von Pixeln in der Längsrichtung des erzeugten linienartigen Bildes aufweisen, als quer dazu.

2. Mikroskop nach Anspruch 1,
**dadurch gekennzeichnet, dass** die wenigstens eine Bewegungsanordnung (24, 26, 28) dazu ausgebildet ist, eine Relativbewegung zwischen dem Objekt (4) und dem linienartigen Objektbeleuchtungsbereich (20') im Wesentlichen orthogonal zur Beleuchtungsachse und zur Detektionsrichtung (10) zu erzeugen.

3. Mikroskop nach Anspruch 2, **dadurch gekennzeichnet, dass** die wenigstens eine Bewegungsanordnung dazu ausgebildet ist, das Objekt (4) zur Erzeugung einer Relativbewegung zu bewegen.

4. Mikroskop nach Anspruch 1 oder 2
**dadurch gekennzeichnet, dass** die wenigstens eine Bewegungsanordnung (24, 26, 28) dazu ausgebildet ist, den wenigstens einen Beleuchtungsstrahlengang (2) wenigstens in dem durch diesen bereitgestellten linienartigen Objektbeleuchtungsbereich (20') zur Erzeugung der Relativbewegung zu bewegen.

5. Mikroskop nach Anspruch 4,
**dadurch gekennzeichnet, dass** die wenigstens eine Bewegungsanordnung (24, 26, 28) dazu ausgebildet ist, den wenigstens einen Detektionsstrahlengang (5) in Anpassung an die Bewegung des wenigstens einen Beleuchtungsstrahlengangs (2) wenigstens in seinem objektnahen Bereich zu bewegen.

6. Mikroskop nach Anspruch 1,
**dadurch gekennzeichnet, dass** der Pixeldetektor (8) ein flächiger Detektor ist.

7. Mikroskop nach Anspruch 6,
**dadurch gekennzeichnet, dass** die Anzahl und die Positionierung der Detektorpixel des Pixeldetektors (8) derart gewählt sind, dass der wenigstens eine Detektionsstrahlengang (5) einen durch den wenigstens einen Beleuchtungsstrahlengang (2) im Objektbeleuchtungsbereich (20') beleuchteten Abschnitt des Objekts (4) im Wesentlichen vollständig auf den Pixeldetektor (8) abbildet.

8. Mikroskop nach einem der Ansprüche 1 bis 7,
**dadurch gekennzeichnet, dass** die wenigstens eine Bewegungsanordnung dazu ausgebildet ist, das zu untersuchende Objekt im Wesentlichen in Richtung der Detektionsrichtung (10) des wenigstens einen Detektionsstrahlengangs (5) zu bewegen.

9. Mikroskop nach einem der Ansprüche 1 bis 8, wobei die Anzahl der Pixel in der Längsrichtung beziehungsweise in der Querrichtung so gewählt ist, dass das erzeugte linienartige Bild vollständig durch den Detektor aufgenommen werden kann.

10. Mikroskop nach einem der Ansprüche 1 bis 9, wobei in dem Pixeldetektor (8) im Wesentlichen eindimensionale Pixelfelder eingesetzt werden.

11. Mikroskop nach Anspruch 10, wobei eine einzige Reihe von Pixeln vorgesehen ist.

12. Mikroskop nach einem der Ansprüche 1 bis 11, wobei das Mikroskop ein Mikroskop mit Mehrfachphotonenänregung ist.

## Claims

1. A microscope for generating an image of an object (4) to be studied, e.g. a millimetersized biological object, the microscope having a holder (12) for holding the object (4) to be studied and at least one illumination beam path (2) and at least one detection beam path (5), and wherein
- a focusing arrangement (3) for producing an object illumination region (20') is provided at the at least one illumination beam path (2),
- a detection direction (10) of the at least one detection beam path (5) is approximately orthogonal to the object illumination region (20'), and
- at least one movement arrangement (24, 26, 28) is provided for producing a relative movement between the object illumination region (20') and the object (4) to be studied, **characterised in that**
the focusing arrangement (3) comprises a lens rotationally symmetric relative to an illumination axis of the illumination beam path (2), such that the object illumination region (20') extends in a linear manner in a direction of the illumination axis of the illumination beam path (2) and illuminates linear-type portions of the object (4) to be studied, and
the detection direction (10) is approximately orthogonal to the linear-type object illumination region (20'), wherein a linear-type image, generated in the detection beam path (5), of the portions illuminated in a linear manner of the object (4) to be studied is imaged onto a pixel detector (8), and wherein elongated pixel arrays are employed in the detector (8), which have a larger number of pixels in the longitudinal direction of the generated linear-type image than transversely thereto.

2. The microscope of claim 1,
**characterized in that** the at least one movement arrangement (24, 26, 28) is configured to produce a relative movement, substantially orthogonal to the illumination axis and to the detection direction (10), between the object (4) and the linear-type object illumination region (20').

3. The microscope of claim 2, **characterized in that** the at least one movement arrangement is configured to move the object (4) for producing a relative movement.

4. The microscope of claim 1 or 2,
**characterized in that** the at least one movement arrangement (24, 26, 28) is configured to move the at least one illumination beam path (2) at least in the linear-type object illumination region (20'), provided by the at least one illumination beam path (2), for producing the relative movement.

5. The microscope of claim 4,
**characterized in that** the at least one movement arrangement (24, 26, 28) is configured to move the detection beam path (5) at least in an area of the detection beam path (5) close to the object, by adjusting to the movement of the at least one illumination beam path (2).

6. The microscope of claim 1,
**characterized in that** the pixel detector (8) is a surface detector.

7. The microscope of claim 6,
**characterized in that** the number and the positioning of the detector pixels of the pixel detector (8) are chosen such that the at least one detection beam path (5) substantially completely images onto the pixel detector (8) a portion, illuminated in the object illumination region (20') by the at least one illumination beam path (2), of the object (4).

8. The microscope of one of the claims 1 to 7,
**characterized in that** the at least one movement arrangement is configured to move the object to be studied substantially in a direction of the detection direction (10) of the at least one detection beam path (5).

9. The microscope of one of claims 1 to 8, wherein the number of pixels in the
longitudinal direction or in the transverse direction are chosen such that the generated linear-type image can be completely captured by the detector.

10. The microscope of one of claims 1 to 9, wherein substantially one-dimensional pixel arrays are employed in the pixel detector (8).

11. The microscope of claim 10, wherein a single row of pixels is provided.

12. The microscope of one of claims 1 to 11, wherein the microscope is a microscope with multi-photon excitation.

## Revendications

1. Microscope pour engendrer une image d'un objet à examiner (4), par exemple un objet biologique de taille millimétrique, le microscope comprenant une fixation (12) pour maintenir l'objet à examiner (4) et au moins un chemin de faisceau d'illumination (2) et au moins un chemin de faisceau de détection (5), et dans lequel
- un dispositif de focalisation (3) est prévu pour le au moins un chemin de faisceau d'illumination (2), pour engendrer une zone d'illumination d'objet (20'),
- une direction de détection (10) du au moins un chemin de faisceau de détection (5) est située sensiblement orthogonalement à la zone d'illumination d'objet (20'), et
- au moins un dispositif de mouvement (24, 26, 28) est prévu pour engendrer un mouvement relatif entre la zone d'illumination d'objet (20') et l'objet à examiner (4) ;
**caractérisé en ce que**
le dispositif de focalisation (3) comprend une lentille à symétrie de rotation par rapport un axe d'illumination du chemin de faisceau d'illumination, de sorte que la zone d'illumination d'objet (20') dans la direction d'un axe d'illumination du chemin de faisceau d'illumination est linéaire et illumine des sections linéaires de l'objet à examiner (4), et
la direction de détection (10) est située sensiblement orthogonalement à la zone d'illumination d'objet (20') linéaire,
dans lequel une image linéaire engendrée dans la direction de faisceau de détection des sections linéaires illuminées de l'objet à examiner (4) est formée sur un détecteur à pixel (8), et dans lequel des champs de pixels allongés sont déployés dans le détecteur (8), qui comprennent un nombre supérieur de pixels dans la direction longitudinale de l'image linéaire engendrée que dans la direction transverse.

2. Microscope selon la revendication 1, dans lequel le au moins un dispositif de mouvement (24, 26, 28) est conçu pour engendrer un mouvement relatif entre la zone d'illumination d'objet (20') linéaire et l'objet à examiner, sensiblement orthogonal à l'axe d'illumination et à la direction de détection (10).

3. Microscope selon la revendication 2, dans lequel le au moins un dispositif de mouvement (24, 26, 28) est conçu de sorte de déplacer l'objet (4) pour engendrer un mouvement relatif.

4. Microscope selon l'une des revendications 1ou 2, dans lequel dans lequel le au moins un dispositif de mouvement (24, 26, 28) est conçu de sorte de déplacer le au moins un chemin de faisceau d'illumination au moins dans la zone d'illumination d'objet (20') linéaire obtenu par l'intermédiaire de celui-ci, pour engendrer le mouvement relatif.

5. Microscope selon la revendication 4, dans lequel le au moins un dispositif de mouvement (24, 26, 28) est conçu de sorte de déplacer le au moins un chemin de faisceau de détection (5) pour ajustement au mouvement du au moins un chemin de faisceau d'illumination (2) au moins dans sa zone proche de l'objet

6. Microscope selon la revendication 1, dans lequel le detector à pixel (8) est un détecteur plat.

7. Microscope selon la revendication 6, dans lequel le nombre et la position des pixels de détection du détecteur à pixel (8) est choisi de sorte que le au moins un chemin de faisceau de détection (5) forme, en totalité sur le détecteur à pixel, une section illuminée de l'objet dans la zone d'illumination d'objet (20') par le au moins un chemin de faisceau d'illumination (5).

8. Microscope selon l'une quelconque des revendications1 à 7, dans lequel le au moins un dispositif de mouvement est conçu de sorte de déplacer l'objet à examiner sensiblement en direction de la direction de détection (10) du au moins un chemin de faisceau de détection (5).

9. Microscope selon l'une quelconque des revendications1 à 8, dans lequel le nombre de pixels dans la direction longitudinale, en particulier dans la direction transverse, est choisi de sorte que l'image linéaire engendrée peut être prise en totalité par le détecteur.

10. Microscope selon l'une quelconque des revendications1 à 9, dans lequel des champs de pixel sensiblement à une dimension peuvent être déployés dans le détecteur à pixel (8).

11. Microscope selon la revendication 10, dans lequel une rangée unique de pixels est prévue.

12. Microscope selon l'une quelconque des revendications 1 à 11, dans lequel le microscope est un microscope à photons multiples.
